Europäisches Patentamt

European Patent Office

Office européen des brevets

(19)

(11) Veröffentlichungsnummer: **0 026 354**
**B1**

(12) **EUROPÄISCHE PATENTSCHRIFT**

(45) Veröffentlichungstag der Patentschrift:
**07.03.84**

(51) Int. Cl.³: **H 02 H 1/06,** H 02 H 3/16,
H 02 H 3/34, H 02 M 7/04

(21) Anmeldenummer: **80105296.0**

(22) Anmeldetag: **04.09.80**

(54) **Schaltungsanordnung für mehrpolige Fehlerstromschutzschalter.**

(30) Priorität: **20.09.79 DE 2938068**

(43) Veröffentlichungstag der Anmeldung:
**08.04.81 Patentblatt 81/14**

(45) Bekanntmachung des Hinweises auf die Patenterteilung:
**07.03.84 Patentblatt 84/10**

(84) Benannte Vertragsstaaten:
**AT FR GB IT NL**

(56) Entgegenhaltungen:
**DE - A - 2 855 923**
**DE - B - 2 653 453**

(73) Patentinhaber: **SIEMENS AKTIENGESELLSCHAFT,**
**Berlin und München Wittelsbacherplatz 2,**
**D-8000 München 2 (DE)**

(72) Erfinder: **Westermayer, Rudolf, Dipl.-Ing., Rennweg 4g,**
**D-8400 Regensburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Schaltungsanordnung für mehrpolige Fehlerstromschutzschalter

Die Erfindung bezieht sich auf eine Schaltungsanordnung für mehrpolige Fehlerstromschutzschalter gemäss dem ersten Teil des Anspruches 1.

Eine bekanne Schaltungsanordnung dieser Art arbeitet mit zwei Gleichrichterstrecken für jeden der Netzleiter, so dass insgesamt bei drei Aussenleitern — früher als Phasenleiter bezeichnet — und einem Neutralleiter — früher als Nulleiter bezeichnet — acht Gleichrichterstrecken benötigt werden (DE-B2-2 653 453). Die Gleichrichterstrecken sind in Brückenschaltung angeordnet und an ihren Verbindungspunkten lässt sich die Hilfsspannung abgreifen.

Die bekannte Schaltungsanordnung liefert die Hilfsspannung so lange, wie zwei von vier Leitern intakt sind. Die Gleichrichterstrecken sind jedoch, wirtschaftlich gesehen, verhältnismässig aufwendige Bauteile.

Der Erfindung liegt die Aufgabe zugrunde, eine Schaltungsanordnung zur sicheren Versorgung von Fehlerstromschutzschaltern, die mit einer Hilfsspannung arbeiten, zu entwickeln, die mit weniger als acht Gleichrichterstrecken auskommt.

Diese Aufgabe wird erfindungsgemäss durch die kennzeichnenden Merkmale des Anspruches 1 gelöst. Eine solche Schaltungsanordnung kommt mit lediglich fünf Gleichrichterstrecken aus.

Falls jeweils Doppelgleichrichterstrecken als ein Baustein zur Verfügung stehen oder aus besonderen Symmetriegründen, kann man nach einer Ausgestaltung der Erfindung die im Anspruch 2 angegebene Ausführung heranziehen. Bei einer solchen Schaltungsanordnung kommt man mit sechs Gleichrichterstrecken bei einer mehrphasigen Schaltungsanordnung aus.

Die Erfindung soll anhand von in der Zeichnung schematisch wiedergegebenen Ausführungsbeispielen näher erläutert werden:

In Fig. 1 ist ein erstes Ausführungsbeispiel wiedergegeben.

In Fig. 2 ist ein weiteres Ausführungsbeispiel dargestellt.

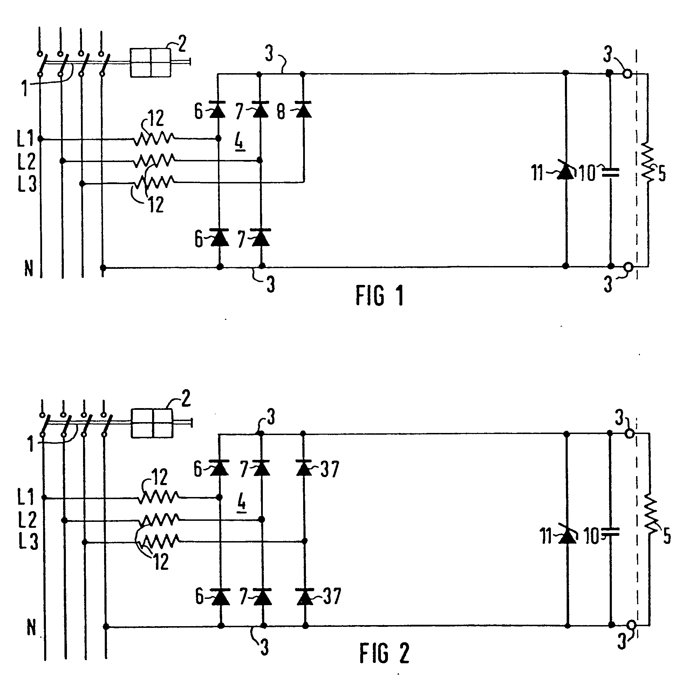

Die Schaltungsanordnung nach Fig. 1 ist an vier zu überwachenden Leitern, den Aussenleitern L1, L2, L3 und dem Neutralleiter N angeschlossen. In den zu überwachenden Leitern sind Schaltkontakte 1 angeordnet, auf die ein Schaltschloss 2 einwirkt. Dieses Schaltschloss 2 ist im Gehäuse eines Fehlerstromschutzschalters untergebracht vorzustellen. Durch den Fehlerstromschutzschalter, der für seinen Betrieb eine Hilfsspannung benötigt, sind die zu überwachenden Leiter hindurchgeführt. Die Hilfsspannung wird an den Verbindungspunkten 3 einer Brückenschaltung 4 abgegeben. Die Hilfsspannung arbeitet auf einen im Fehlerstromschutzschalter angeordnet vorzustellenden Verbraucher 5.

Jeweils zwei Gleichrichterstrecken 6 bzw. 7 sind zu zwei Aussenleitern L1 und L2 in Brückenschaltung 4 angeordnet. Mit dem einen Verbindungspunkt 3 ist eine einzelne Gleichrichterstrecke 8 des dritten Aussenleiters L3 verbunden. Mit dem anderen Verbindungspunkt 3 ist der Neutralleiter N verbunden.

Diese Schaltungsanordnung kommt mit lediglich fünf Gleichrichterstrecken aus.

Da der Strombedarf in der Hilfsversorgung eines elektronisch arbeitenden Fehlerstromschutzschalters in der Regel unterhalb von 2 mA liegt und die Spannung von Netzspannungswerten herunterzutransformieren ist, können netzseitig Widerstände 12 vorgeschaltet sein, wie es dargestellt ist.

Zwischen dem Potential der Verbindungspunkte 3 können übliche Glättungsmittel, im Ausführungsbeispiel ein Kondensator 10 und ein oberhalb einer Schwellspannung arbeitendes Ventil 11, z.B. eine Zenerdiode, angeordnet sein.

In der Schaltungsanordnung nach Figur 2 sind jeweils zwei Gleichrichterstrecken 6, 7, 37 zu drei Aussenleitern in Brückenschaltung 4 in an sich bekannter Weise angeordnet. Der Neutralleiter N ist jedoch mit einem der Verbindungspunkte 3 verbunden. An den Verbindungspunkten 3 kann wieder die Hilfsspannung abgegriffen werden. Diese Schaltungsanordnung kommt anders als die bekannte Schaltung mit lediglich sechs Gleichrichterstrecken aus.

**Patentansprüche**

1. Schaltungsanordnung für mehrpolige Fehlerstromschutzschalter, die mit einer über Gleichrichterstrecken (6, 7, 8; 6, 7, 37) abgeleiteten Hilfsspannung arbeiten, wobei jeweils zwei Gleichrichterstrecken (6, 7) zu zwei Netzleitern (aus L1, L2, L3, N), bestehend aus Aussenleitern (L1, L2, L3) und Neutralleiter (N), in Brückenschaltung (4) angeordnet sind, dadurch gekennzeichnet, dass mit dem einen der Verbindungspunkte (3) der Brückenschaltung (4) eine einzelne Gleichrichterstrecke (8) für jeden weiteren Aussenleiter (z.B. L3) verbunden ist, dass mit dem anderen Verbindungspunkt (3) der Brückenschaltung (4) der Neutralleiter (N) verbunden ist und dass an den Verbindungspunkten (3) die Hilfsspannung abgreifbar ist.

2. Schaltungsanordnung nach Anspruch 1, dadurch gekennzeichnet, dass die einzelne Gleichrichterstrecke (8) für jeden der weiteren Aussenleiter ergänzt ist durch eine weitere Gleichrichterstrecke (37), die mit dem anderen der Verbindungspunkte (3) verbunden ist.

**Claims**

1. Circuit system for multipole fault current protection switches adapted to cooperate with an auxiliary voltage derived from rectifier sections (6, 7, 8; 6, 7, 37) each of two rectifier sections (6, 7) being arranged in bridge connection (4) with two mains conductors (from L1, L2, L3, N), comprising phase conductors (L1, L2, L3) and neutral conductor (N), characterised in that a single rectifier section (8) is connected to one of the junctions (3) of the bridge circuit (4) for each additional phase conductor (for example L3), that the neutral conductor (N) is connected to the other junctions (3) of the bridge circuit (4) and that the auxiliary voltage can be tapped off from the junctions (3).

2. Circuit system according to claim 1, characterised in that the individual rectifier section (8) for each of the further phase conductors is supplemented by a second rectifier sections (37) which is connected to the second of the junctions (3).

**Revendications**

1. Circuit pour des disjoncteurs multipolaires de courant de fuite qui opèrent avec une tension auxiliaire dérivée par l'intermédiaire de voies de redressement (6, 7, 8; 6, 7, 37), deux voies de redressement (6, 7) étant respectivement agencées montage en pont (4) avec deux conducteurs de réseau (parmi L1, L2, L3, N), constitué par des conducteurs extérieurs (L1, L2, L3) et un conducteur neutre (N), caractérisé par le fait qu'à un des points de jonction (3) du circuit un pont (4) est relié une voie de redressement individuelle (8) pour chaque autre conducteur extérieur (par ex. L3), qu'à l'autre point de jonction (3) du circuit en pont (4) est relié le conducteur neutre (N), et qu'au niveau des points de jonction (3) peut être prélevée la tension auxiliaire.

2. Circuit suivant la revendication 1, caractérisé par le fait que la voie de redressement individuelle (8) pour chacun des autres conducteurs extérieurs est complété par une autre voie de redressement (37) qui est reliée à l'autre des points de jonction (3).

FIG 1

FIG 2